# EUROPEAN PATENT SPECIFICATION

(11) **EP 1 504 517 B1**
(45) Date of publication and mention of the grant of the patent: **05.11.2008**
(21) Application number: 03721142.2
(22) Date of filing: 12.05.2003
(51) Int. Cl.: H02M 3/337

(54) **METHOD OF REGULATED RESONANCE DC-DC VOLTAGE CONVERSION**
VERFAHREN ZUR SPANNUNGSWANDLUNG VOM GLEICHSTROM-GLEICHSTROM-TYP MIT GEREGELTER RESONANZ
PROCEDE DE CONVERSION DE TENSION CC-CC A RESONANCE REGULEE

(30) Priority: 16.05.2002 MD 20020142; 04.04.2003 MD 20030101
(43) Date of publication of application: 09.02.2005
(73) Proprietor: INTREPRINDEREA Mixta Moldo-Rusa "Elcon" S.R.L., 2028 Kishinev (MD)
(72) Inventor: PENIN, Alexandr Anatolie, 2069 Kishinev (MD); SEMIONOV, Alexandr Gherman, 2044 Kishinev (MD)
(74) Representative: Benatov, Emil Gabriel
(86) International application number: PCT/MD2003/000001
(87) International publication number: WO 2003/098789

(56) References cited:
- WO-A-94/14230
- US-A- 4 679 129
- PATENT ABSTRACTS OF JAPAN vol. 013, no. 325 (E-792), 21 July 1989 (1989-07-21) & JP 01 091672 A (TOSHIBA ELECTRIC EQIP. CORP.), 11 April 1989 (1989-04-11)

## Description

The present invention relates to electrical engineering, in particular to a regulated transistor resonant high-frequency voltage converter with excellent efficiency, high-power and low in cost, which can be used in different fields, in particular, in cathodic protection stations operating at elevated temperatures and natural cooling, welding units, inductive heating units, and radio transmitters.

A known method [1] of regulated resonance DC-DC voltage conversion is based on the following:
- generating oscillations with a natural cycle T₀ and a commutation cycle T_{c} using a resonant choke and a resonant capacitor consuming power from a constant-voltage power supply and transmitting a part of power to the rectifying load;
- regulating the load voltage at the expense of resonance derivation (the cycle of natural oscillations T₀) of the cycle T_{c}, which is less or equal to T₀.

The disadvantage of the above method is that the derivation causes a significant increase of losses and reduction of reliability due to the lack of the main advantage of the resonant converters, namely commutation at zero currents. That is why in practice such method is applicable in low-power converters.

The closest prior art in respect of the present invention is a method [2] providing a regulated resonance DC-DC voltage conversion based on
- generating oscillations with a natural cycle T₀ and a commutation cycle of switches T_{c} (T_{c} > 2 T₀) using the resonant capacitor and resonant choke consuming power from a constant-voltage power supply and transmitting a part of power to the rectifying load;
- returning the excess of power from the resonant capacitor to the voltage power supply;
- regulating the load voltage at the expense of change of T_{c}.
- limiting of the current pulse front of switch elements by means of additional inductance capacitors.

The main advantage of the resonant converters manufactured with the method of the present invention is commutation at zero currents. The peculiarity of this method is that the effect of regulation (the change of the voltage or load current) is occurred due to the return of the power to the voltage supply at the expense of discharge of the resonant capacitor to the power supply via the load.

The main disadvantage is inadmissible overload situations (increasing of currents of the switches) in case of overloads or short circuits in a load circuit at a nominal or maximum frequency. In this case a great amount of energy accumulated in the inductance capacitors does not manage to return to the power supply during a short period of time (T_{c} - Tₒ)/2. It appears because of current breakage through switches, although with a setting front Thus, it would be necessary to take measures to protect the switches that complicates the method itself, narrows the regulating range and limits the field of application.

A device that implements the method of conversion described in the invention is a half-bridge resonant DC-DC voltage converter comprising a capacitance voltage divider, inductance capacitor with a load that are connected between the transistor rack of the half-bridge and a middle output of capacitance divider. The additional inductance capacitors are connected to each transistor arm.

The aim which is achieved by the present invention is provision of a wide regulating range and widening of the field of application.

The aim is achieved by that in accordance with the method of regulated resonance DC-DC voltage conversion based on
- generating oscillations with a natural cycle T₀ and a commutation cycle T_{c} (T_{c} > T₀) using a resonant capacitor and a resonant choke consuming power from a constant-voltage power supply and transmitting a part of power to the rectifying load;
- returning the excess power from the resonant capacitor to the voltage supply;
- regulating the load voltage at the expense of change of T_{c},
where simultaneously with the above-said oscillations or the first oscillations the second oscillations with a natural cycle T₀ and a commutation cycle T_{c} (T_{c} > T₀) are generated using the same resonant capacitor and the second resonant choke consuming power from the resonant capacitor and transmitting a part of power to the rectifying load.

The main feature of the method of the present invention consists in simultaneous current flow of switches (without a breakage) that provides for the returning of the accumulated energy of the inductance capacitors at the maximum frequency even in case of a short-circuit.

The foregoing, features and advantages of the present invention will be better understood from the following detailed description, taken in conjunction with the accompanying drawings 1 - 14, in which:

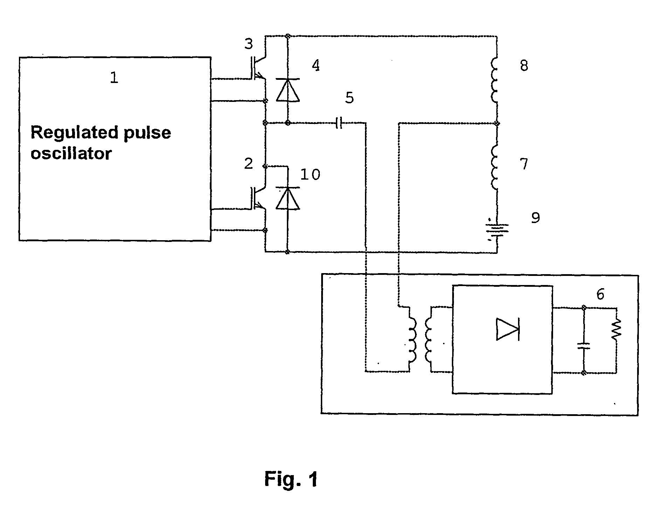

Fig. 1 is a schematic representation of a device in accordance the present invention;
Fig. 2 illustrates orthographic representations of currents and voltages;
Fig. 3 shows parts of the equivalent schematic representation of the device which illustrate the processes in the time interval t 1-t 2;
Fig 4 shows parts of the equivalent schematic representation of the device which illustrate the processes in the time interval t 2-t 3;
Fig. 5 shows parts of the equivalent schematic representation of the device which illustrate the processes in the time interval t 3-t 4;
Fig. 6 shows parts of the equivalent schematic representation of the device which illustrate the processes in the time interval t 4-t 5;
Fig. 7 shows parts of the equivalent schematic representation of the device which illustrate the processes in the time interval t 5-t 6;
Fig. 8 shows parts of the equivalent schematic representation of the device which illustrate the processes in the time interval t 6-t 7;
Fig. 9 shows parts of the equivalent schematic representation of the device which illustrate the processes in the time interval t 7-t 8;
Fig. 10 shows parts of the equivalent schematic representation of the device which illustrate the processes in the time interval t 8-t 9;
Fig. 11 shows parts of the equivalent schematic representation of the device which illustrate the processes in the time interval t 9-t 10;
Fig. 12 shows parts of the equivalent schematic representation of the device which illustrate the processes in the time interval t 10-t 11;
Fig. 13 shows parts of the equivalent schematic representation of the device which illustrate the processes in the time interval t 11-(t 1 +T_{c});
Fig. 14 shows a family of regulating characteristics, according to the present invention.

A device, in accordance with the present invention, comprises a regulated pulse oscillator 1 which outputs are connected to transistor gates 2 and 3 forming half-bridge transistors. An emitter of the transistor 2 is the first output of the said half-bridge transistors, and a collector of the transistor 3 is the second output of the said half-bridge transistors. Anti-parallel diode 4 is connected to the collector and emitter of the transistor 3. An equal point of the transistors 2 and 3, being the collector of the transistor 2 and the emitter of the transistor 3 (the middle output of the half-bridge transistors), is connected via the resonant capacitor 5 to one of the outputs of the transformer-rectifying load 6. Resonant chokes 7 and 8 are connected in series, and their equal point is connected to another output of the load 6. A voltage power supply 9 is connected to the lower output of the choke 7 and the emitter of transistor 2. The upper output of the choke 8 is connected to the collector of transistor 3. The anti-parallel diode 10 is connected to the transistor 2.

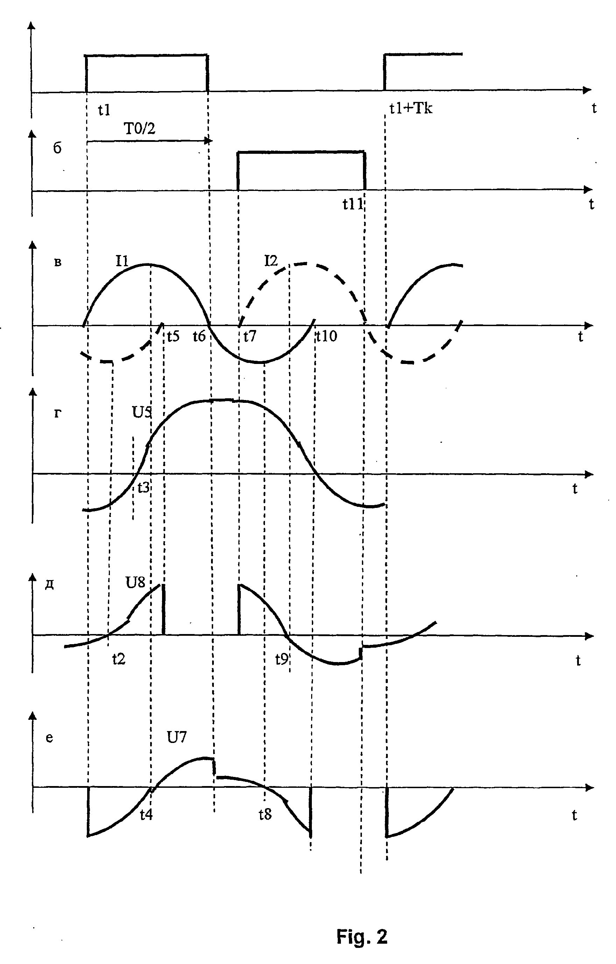

In accordance with the method of the resonance conversion of the present invention the pulse oscillator 1 generates control pulses (Fig. 2 a, b) with duration of a pulse T₀/2 and regulated commutation cycle T_{c}, which in turn open the transistors 2 and 3. In the steady state of operation at the instant of time t1 the control pulse is fed to the lower transistor 2. A sinusoidal current pulse I1 (Fig. 2, c) begins to flow via this transistor (the first oscillations). Current I2 also continues flowing via the anti-parallel diode 4 of the upper transistor 3 (the second oscillations).

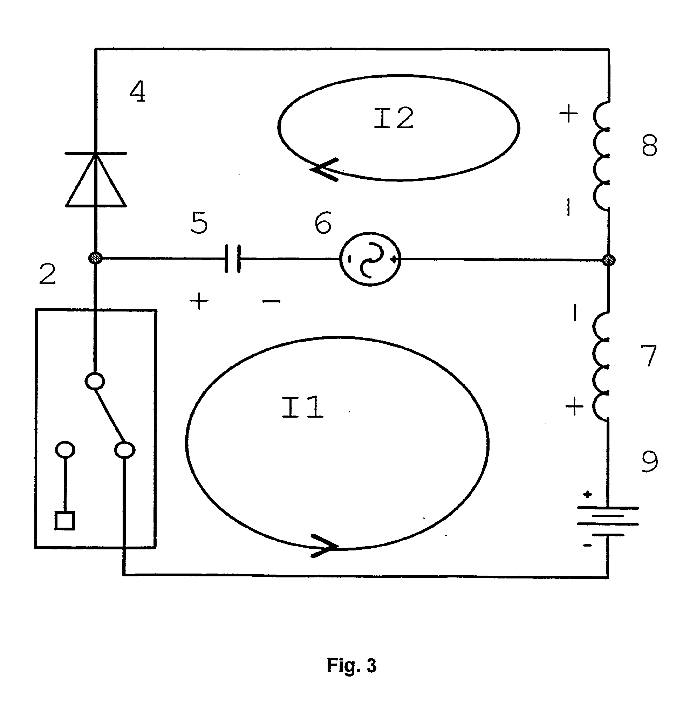

The time interval t 1 - t 2 is the first characteristic time period. Fig. 3 shows the corresponding part of the equivalent schematic representation. The resonant capacitor 5 (with voltage U5 shown in Fig. 2 d) is recharged via the transformer-rectifying unit 6 switching the transformer 6.1, the rectifier 6.2 and the load 6.3 itself, as well as the first resonant choke 7, which accumulates the power. At the same time the resonant capacitor 5 is discharged via the second resonant choke 8 (with voltage U8 shown in Fig. 2 e), which accumulates power in accordance with the shown polarity.

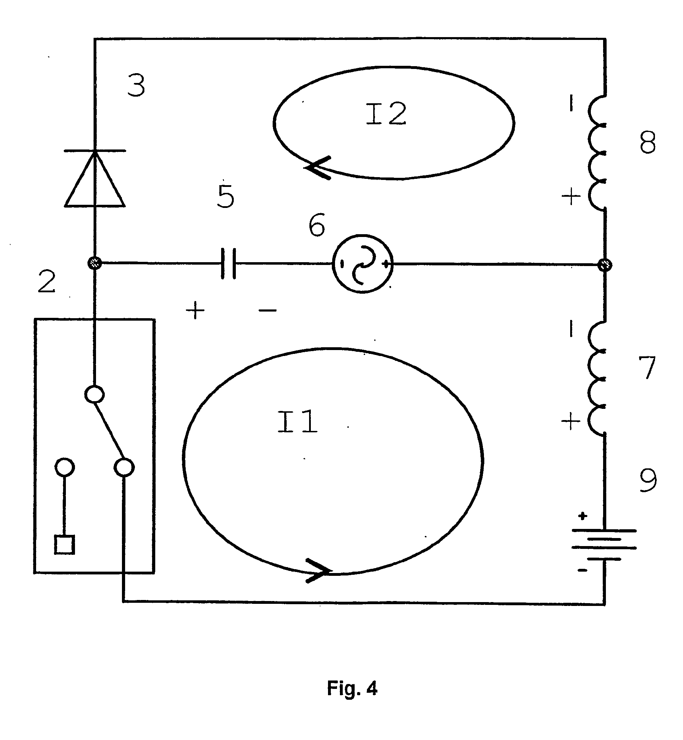

The time interval t2 - t3 is the second characteristic time period. Fig. 4 shows the corresponding part of the equivalent schematic representation. The resonant capacitor 5 continues recharging via the transformer-rectifying load 6 and the first resonant choke 7. The resonant capacitor 5 is discharged via the second resonant choke 8, which has already returned power in accordance with the shown polarity.

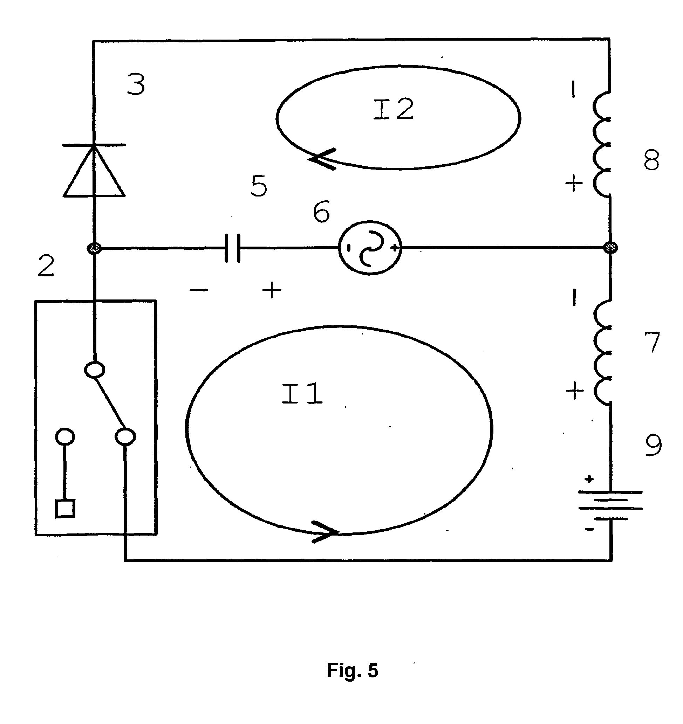

The time interval t 3 - t 4 is the third characteristic time period. Fig. 5 shows the corresponding part of the equivalent schematic representation. The resonant capacitor 5 continues charging via the transformer-rectifying load 6 and the first resonant choke 7 (with voltage U7 shown in Fig. 2 f). At the same time the resonant capacitor 5 has been charged from the second resonant choke 8, which continues returning power in accordance with the shown polarity.

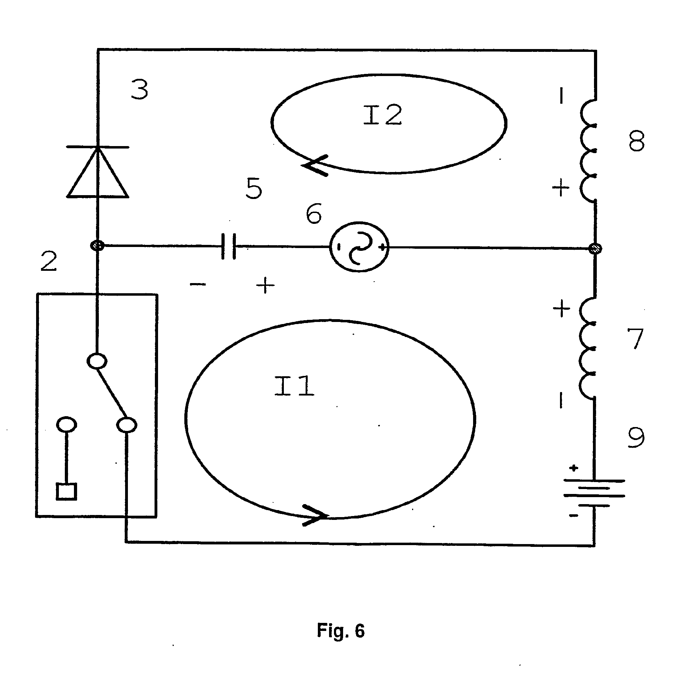

The time interval t 4 - t 5 is the fourth characteristic time period. Fig. 6 shows the corresponding part of the equivalent schematic representation. The resonant capacitor 5 continues charging via the transformer-rectifying load 6 and the first resonant choke 7, which has already returned power in accordance with the shown polarity. At the same time the resonant capacitor 5 continues charging from the second resonant choke 8.

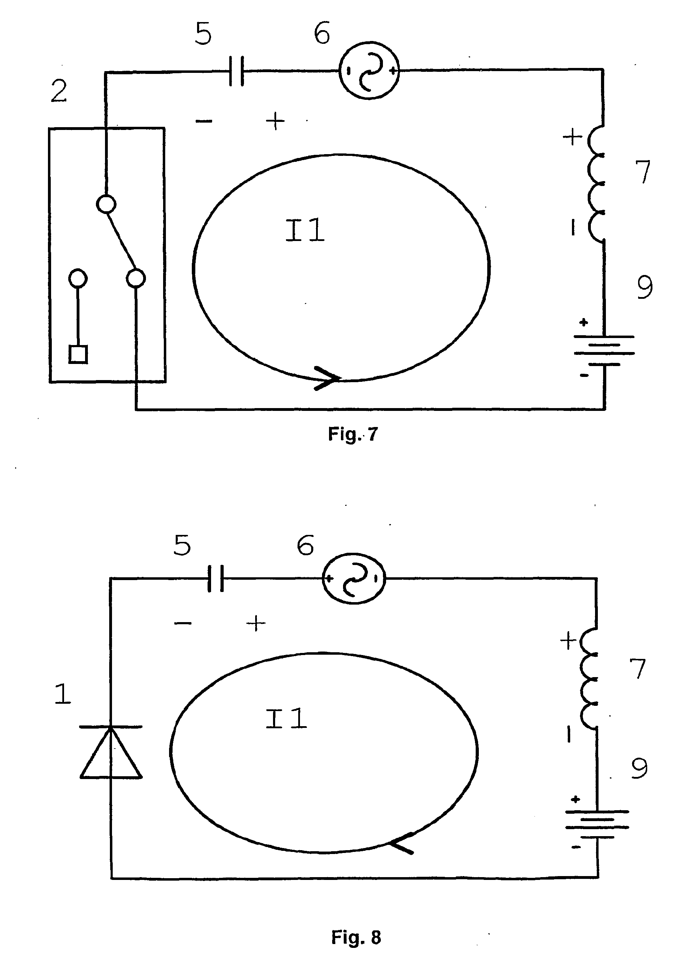

The time interval t 5 - t 6 is the fifth characteristic time period. Fig. 7 shows the corresponding part of the equivalent schematic representation. The resonant capacitor 5 is charged via the transformer-rectifying load 6 and the first resonant choke 7.

The time interval t 6 - t 7 is the sixth characteristic time period. Fig. 8 shows the corresponding part of the equivalent schematic representation. The resonant capacitor 5 has already returned power via the transformer-rectifying load 6 and the first resonant choke 7. The current I1 changes its direction.

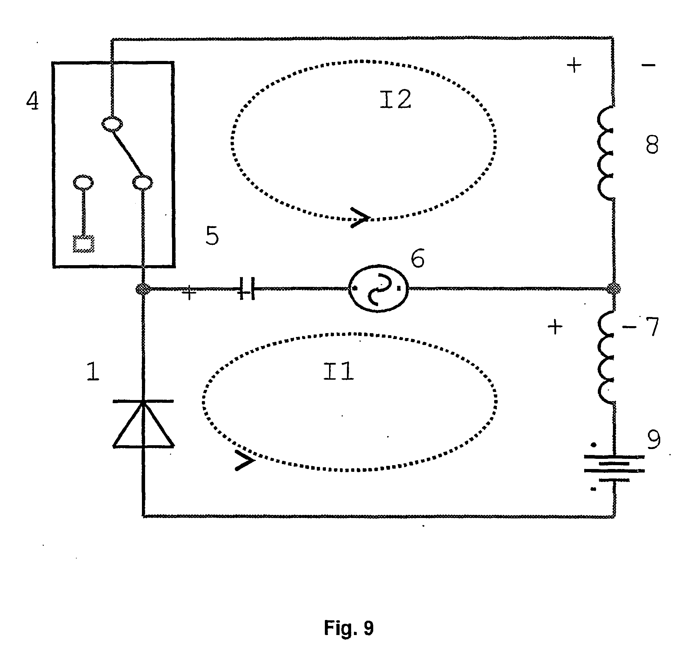

The time interval t 7 - t 8 is the seventh characteristic time period. Fig. 9 shows the corresponding part of the equivalent schematic representation. The control pulse is fed to the upper transistor 3. A sinusoidal current pulse I1 (Fig. 2, c) begins flowing via the said transistor (the second oscillations). Current 11 also continues flowing via the anti-parallel diode 10 of the lower transistor 2 (the first oscillations). The resonant capacitor 5 returns power via the transformer-rectifying load 6 and the first resonant choke 7 to the voltage power supply 9 and the second resonant choke 8.

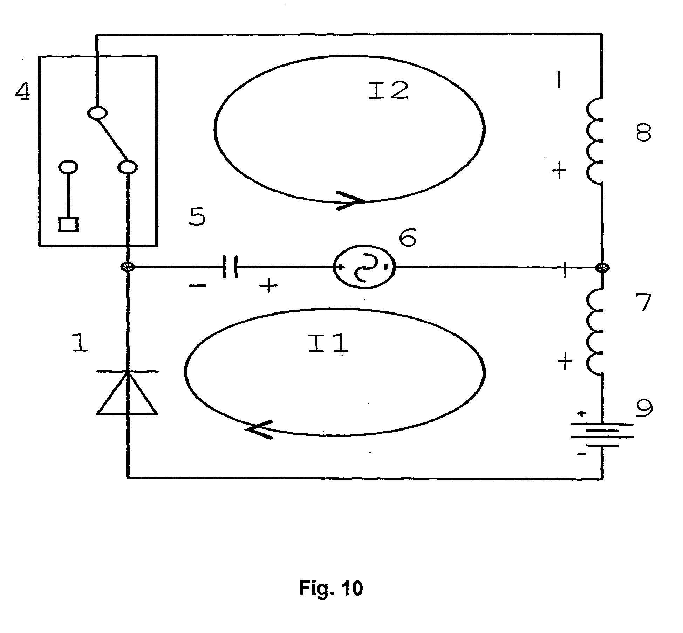

The time interval t 8 - t 9 is the eighth characteristic time period. Fig. 10 shows the corresponding part of the equivalent schematic representation. The resonant capacitor 5 and the first resonant choke 7 are returning power via the transformer-rectifying load 6 to the voltage power supply 9, and the resonant capacitor 5 is also returning power to the second resonant choke 8.

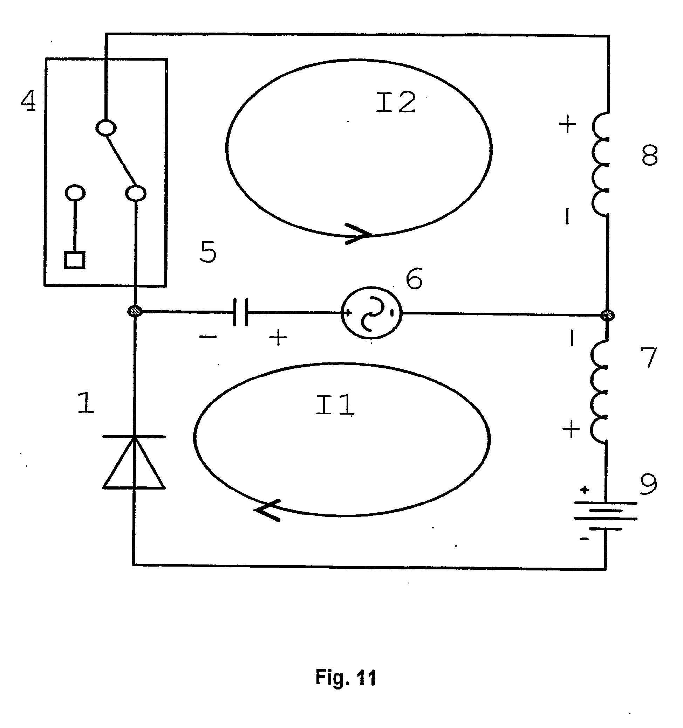

The time interval t 9 - t 10 is the ninth characteristic time period. Fig. 11 shows the corresponding part of the equivalent schematic representation. The resonant capacitor and all resonant chokes are returning power.

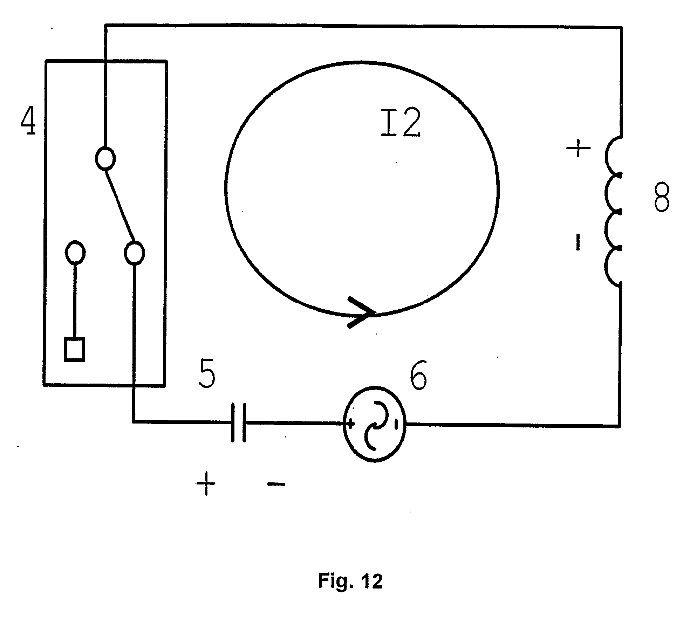

The time interval t 10 - t 11 is the tenth characteristic time period. Fig. 12 shows the corresponding part of the equivalent schematic representation. The recharging of the resonant capacitor 5 is carried out at the expense of power of the second resonant choke 8.

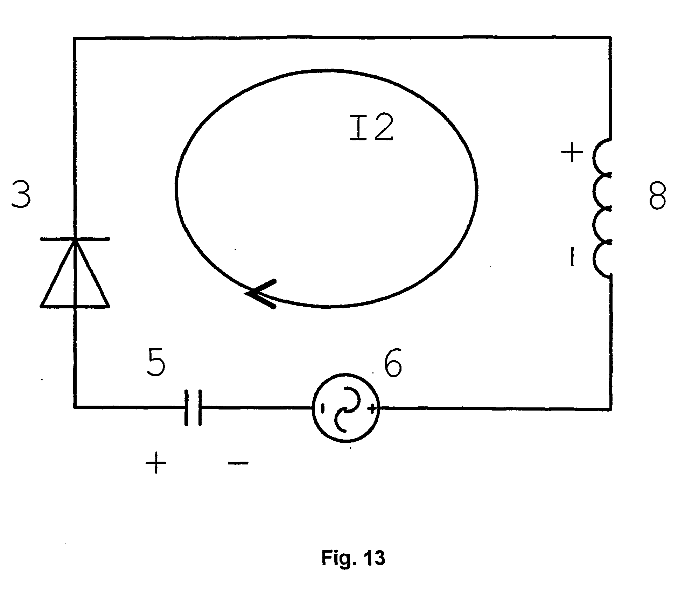

The time interval t 11 - t 1 is the final characteristic time period. Fig. 13 shows the corresponding part of the equivalent schematic representation. The discharging of the resonant capacitor 5 is carried out. Then, the processes start again.

Thus, during the time interval t 6 - t 7 the return of power to the supply is carried out (the current I1 has changed its direction). The negative amplitude of current I1 is determined by the load value. The power return occurs when T_{c} diminishes and the value of t 7 approximates t 6.

The above determines the additional advantages of the method, namely, the positive current amplitude is not increased till the short circuit of the load occurs. There is a lack of problem of cross current that simplifies and improves reliability of transistors' control.

The practical example of the performance of the method is as follows. The depicted voltage converter for the cathodic protection stations has the following characteristics:
- power: 1.8 kW;
- mains supply: ∼220 V;
- transistors: IPGPC30UD;
- capacitance c the resonant capacitor 5: 0.15 µF;
- resonant chokes: 7.8 each 25 µH;
- the cycle of natural oscillations: T₀= 12 µs;
- transformation ratio of the transformer 6.1: 1/2 (that determines the nominal load range which is approximately 0.8-2 Ohm.

For the minimum value of the commutation cycle T_{c}=13 µs (F_{c}=77 kHz) and load of 1 Ohm the current amplitudes I1 are +29A and -7A, correspondingly. For load of 0.5 Ohm the current amplitudes I1 are +29A and-14A, correspondingly. In the case of short circuit the current amplitudes I1 are +29A and -21A.

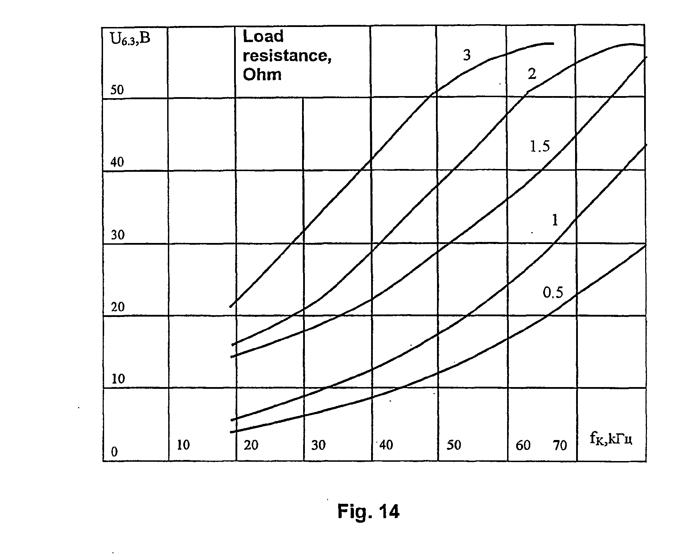

Fig. 14 shows a family of regulating characteristics described in the present the invention.

Bibliographic Sources of Information
1. High-frequency transistor converters / E.M. Romash, Y. I. Drobovich. N.N. Yurchenko, P.N. Shevchenko. - M.: Radio i Svyazi, 1988.- 288 p.
2. PCT, WO94/14230, 23.06.94, H02M 3/335.

## Claims

1. A method of regulated resonance DC-DC voltage conversion based on
- generating oscillations with a natural cycle T₀ and a commutation cycle T_{c} (T_{c} > T₀) using the resonant capacitor and the resonant choke consuming power from a constant-voltage power supply and transmitting a part of power to the rectifying load;
- returning the excess power from the resonant capacitor to the power supply;
- regulating the load voltage at the expense of change of T_{c},
***characterized in that*** simultaneously with the said oscillations or the first oscillations the second oscillations with a natural cycle T₀ and a commutation cycle T_{c} (T_{c} > T₀) are generated using the same resonant capacitor and the second resonant choke consuming power from the resonant capacitor and transmitting a part of power to the transformer-rectifying load.

## Patentansprüche

1. Verfahren zur Spannungswandlung vom Gleichstrom-Gleichstrom-Typ mit geregelter Resonanz, das auf
- der Erzeugung von Schwankungen mit einer natürlichen Periode T₀ und einer Kommutierungsperiode T_{c} (T_{c}>T₀) durch die Verwendung vom Resonanzkondensator und der Resonanzdrossel, die Leistung von einer Gleichspannungsenergieversorgung verbraucht und einen Teil von dieser Leistung an die gleichrichtende Last sendet;
- der Rücklieferung der überflüssigen Leistung vom Resonanzkondensator zur elektrischen Energieversorgung, und
- der Regelung der Lastspannung auf Kosten der Änderung von T_{c} basiert ist,
**dadurch gekennzeichnet, dass** die zweiten Schwankungen mit einer natürlichen Periode T₀ und einer Kommutierungsperiode T_{c} (T_{c}>T₀) gleichzeitig mit den erwähnten Schwankungen oder den ersten Schwankungen generiert werden, wobei der gleiche Resonanzkondensator und die zweite Resonanzdrossel, die Leistung vom Resonanzkondensator verbraucht und einen Teil von der Leistung bis zu der gleichrichtenden Last mit Transformator überträgt, verwendet werden.

## Revendications

1. Procédé de conversion de tension de courant continu en courant continu à résonance régulée, ledit procédé étant basé sur
- la génération d'oscillations d'une période naturelle T₀ et d'une période de commutation T_{c} (T_{c} > T₀) en utilisant le condensateur de résonance et l'inductance de résonance qui consomme de l'énergie d'une source d'alimentation à tension continue et transmet une partie de cette énergie à la charge redressante;
- la récupération de l'énergie superflue du condensateur de résonance à la source d'alimentation, et
- le réglage de la tension de la charge aux dépens du changement de T_{c},
**caractérisé en ce que** les deuxièmes oscillations d'une période naturelle T₀ et d'une période de commutation T_{c} (T_{c} > T₀) sont générées simultanément avec lesdites oscillations ou les premières oscillations en utilisant le même condensateur de résonance et la deuxième inductance de résonance qui consomme de l'énergie du condensateur de résonance et transmet une partie de l'énergie à la charge redressante à transformateur.
